# EUROPÄISCHE PATENTSCHRIFT

(11) **EP 2 084 610 B1**
(45) Veröffentlichungstag und Bekanntmachung des Hinweises auf die Patenterteilung: **05.09.2012**
(21) Anmeldenummer: 07817726.8
(22) Anmeldetag: 24.10.2007
(51) Int. Cl.: G06F 11/34

(54) **COMPUTERGESTÜTZTES VERFAHREN ZUR FERNGESTEUERTEN ERFASSUNG DES USERVERHALTENS BEI DER REZEPTION VON WEBSEITEN**
COMPUTER-AIDED METHOD FOR THE REMOTE-CONTROLLED ACQUISITION OF THE USER BEHAVIOUR IN THE RECEPTION OF WEB PAGES
PROCÉDÉ ASSISTÉ PAR ORDINATEUR POUR SAISIR À DISTANCE LE COMPORTEMENT D'UN UTILISATEUR À LA RÉCEPTION DE PAGES INTERNET

(30) Priorität: 25.10.2006 DE 102006051092
(43) Veröffentlichungstag der Anmeldung: 05.08.2009
(73) Patentinhaber: Nurago GmbH, 30159 Hannover (DE)
(72) Erfinder: BOSENICK, Tim, 22297 Hamburg (DE); MÜLLER, Torsten, 22041 Hamburg (DE); KNAUER, Thomas, 30655 Hannover (DE); KÖSEL, Arne, 30163 Hannover (DE); SCHULTZE, Björn, 30159 Hannover (DE)
(74) Vertreter: Spahn, Tobias
(86) Internationale Anmeldenummer: PCT/DE2007/001892
(87) Internationale Veröffentlichungsnummer: WO 2008/049403

(56) Entgegenhaltungen:
- EP-A- 1 380 928
- EP-A1- 1 176 517
- US-A- 5 220 658
- US-A- 6 052 730
- US-A1- 2002 042 732
- US-A1- 2002 099 850
- US-A1- 2004 019 688
- US-A1- 2004 039 827
- US-A1- 2004 237 044
- US-A1- 2006 218 304
- US-B1- 6 526 526
- BOYAN J: "The Anonymizer - Protecting User Privacy on the Web" INTERNET CITATION, [Online] 1997, XP002231197 Gefunden im Internet: URL:http://citeseer.nj.nec.com/cache/paper s/cs/78/http:zSzzSzwww.cs.cmu.e duzSz~jabzSzpubszSzboyan.anonymizer.pdf/th e-anonymizer.pdf> [gefunden am 2003-02-14]
- TIM BOSENICK ET AL: "Remote Usability Tests - An Extension of the Usability Toolbox for Online-Shops" UNIVERSAL ACESS IN HUMAN COMPUTER INTERACTION. COPING WITH DIVERSITY LECTURE NOTES IN COMPUTER SCIENCE;;, SPRINGER BERLIN HEIDELBERG, BE, Bd. 4554, 2007, Seiten 392-398, XP019063281 ISBN: 978-3-540-73278-5

## Beschreibung

### 1. Technisches Gebiet:

Die vorliegende Erfindung betrifft ein computergestütztes Verfahren zur femgesteuerten Erfassung des Userverhaltens bei der Rezeption von Webseiten.

### 2. Stand der Technik:

Für die Betreiber von Webseiten ist es bedeutsam, zu wissen, wie ihre Webseiten vom User wahrgenommen werden und wie die User mit den Webseiten interagieren. Auf der Grundlage dieser Informationen kann beispielsweise eine nutzungsfreundliche und zielgruppengerechte Anordnung von Navigations- und Inhaltselementen vorgenommen und so die Bedienungsfreundlichkeit der Webseiten verbessert werden.

Um die Bedienungsfreundlichkeit (Usability) von Webseiten zu testen, werden in der Regel explorative Einzelinterviews im Labor (Usability-Lab) durchgeführt. Die Testpersonen lösen auf der zu evaluierenden Website Aufgaben und werden dabei vom Testleiter beobachtet. Im Anschluss werden die Probanden über ihre Erfahrungen und Wahrnehmungen bei der Benutzung der Webseiten befragt. Eine weitere Untersuchungsmethode in Usability-Labs ist die Blickbewegungsmessung. Hierbei werden die Blickbewegungen der Testpersonen während des Betrachtungsvorgangs mithilfe einer Augenkamera aufgenommen. Beide Methoden haben den Nachteil, dass sie kostspielig und personalintensiv sind. Sämtliche Varianten der Laboruntersuchung bergen zudem den Nachteil, dass sich die Testpersonen aufgrund der künstlichen Laboratmosphäre nicht natürlich verhalten, zudem können die in der Praxis bestehenden unterschiedlichen technischen Umgebungen der tatsächlichen User der Webseiten nicht berücksichtigt werden. Webseiten können von allen Orten abgerufen und betrachtet werden, sie benötigen lediglich eine technische Infrastruktur, die ihren Abruf vom Webserver ermöglicht. Die technischen Infrastrukturen der einzelnen User sind dabei in der Praxis so unterschiedlich wie die User selbst. Diese Unterschiede in den technischen Infrastrukturen der User, die zu ganz individuellen Problemen bei der Betrachtung und Bedienung von Webseiten führen können, können in Labortests in ihrer ganzen Vielfalt nicht oder nur schwer nachgebildet werden.

Eine direkte Methode der Untersuchung des Nutzerverhaltens ohne die Verwendung von Laboren ist die Auswertung der Logfiles der Webserver, auf denen die Webseiten im Internet abrufbar sind. In diesen Dateien protokollieren Webserver die Abrufe der von Ihnen vorgehaltenen Dokumente und Dateien. Mittels verschiedener Programme (Logfile-Analyzer) ist es möglich, die Daten mit unterschiedlichen Interpretationsansätzen auszuwerten. Die so erworbenen Informationen sind allerdings sehr ungenau und enthalten keine Daten über die Interaktion des Users mit dem übermittelten Dokument, wie etwa Mausbewegungen oder Mausscrolling-Daten. Mit Hilfe der Logfiles können daher keine Aussagen darüber getroffen werden, wie schnell der User die einzelnen unterschiedlichen Seitenelemente erfasst und erkannt hat, sowie welche dokumentintemen Funktionen oder Links er genutzt hat. Ein weiterer Nachteil dieser Methode besteht darin, dass zur Untersuchung ein Zugriff auf die serverseitigen Logfiles erforderlich ist und die Untersuchung von Webseiten Dritter, etwa Wettbewerbern, daher nicht möglich ist.

Eine weitere direkte Methode der Untersuchung der Bedienungsfreundlichkeit von Webseiten ist die Verwendung von Kommunikationssoftware, die clientseitig auf dem Computersystem des Users installiert wird und die Echtzeit-Kommunikation mit dem Testleiter während des Betrachtungsvorgangs ermöglicht (etwa Microsoft Netmeeting oder Symantec PC Anywhere). Diese Programme ermöglichen es dem Testleiter auch, sich auf dem Desktop des Probanden einzuloggen und dessen Verhalten anhand der Aktionen auf dem Bildschirm zu beobachten. Diese Methode ermöglicht somit die ferngesteuerte Untersuchung der Betrachtungsvorgänge direkt am Computersystem des Probanden (Remote-Usability-Testing). Der Nachteil dieser Methode liegt jedoch darin, dass auf den Computersystemen der potentiellen Probanden zunächst spezielle Software installiert und eingerichtet werden muss. Hierzu muss der User der Installation zustimmen wollen, was ein entsprechendes Vertrauen voraussetzt, und zudem die notwendigen Rechte zur Vornahme einer Installation an dem Computersystem haben. Erfahrungsgemäß erfordert die Installation und Einrichtung von Software einen erheblichen personalen und zeitlichen Aufwand. Ferner muss das Computersystem des Probanden den Anforderungen der spezifischen Kommunikationssoftware genügen, was den Kreis der möglichen Probanden einschränkt.

Aus der US-6, 052, 730 ist ein Verfahren zur URL-bezogenen Überwachung und Dokumentation der Surfsitzungen von internet-Usern bekannt. Bei diesem Verfahren fängt ein erster HTTP-Server die HTTP-Anfragen eines Clients an einen zweiten HTTP-Server ab, führt sie in eigenem Namen selbst aus, readressiert sämtliche im erhaltenen Dokument enthaltenen URLs an sich selbst und gibt das so modifizierte Dokument an den Client weiter. Die mögliche clientseitige Veränderung von URLs wird nicht berücksichtigt. Deshalb besteht bei diesem Verfahren die Möglichkeit, dass Internet-User aus der Überwachung herausfallen und nicht weiter erfasst werden können.

Als weitere Methode des Remote-Usability-Testing wurden verschiedene Ansätze entwickelt, die darauf beruhen, die Bewegungen und Klicks, die der Proband beim Betrachten und Interagieren mit einer Webseite mit der Maus oder anderen Zeigegeräten vollzieht, aufzuzeichnen und auszuwerten. Diese Ansätze beruhen auf der Grundannahme, dass Bewegungen eines handgeführten Zeigegeräts beim Betrachtungsvorgang die Bewegungen des Auges nachvollziehen und diese so widerspiegeln. Die DE10049825A1 lehrt ein Verfahren zum Betrieb eines Kommunikationssystems, bei dem verschiedene Bedienhandlungen eines Internet-Users, etwa die Bewegungsführung der Maus, mit Hilfe eines speziellen, auf dem Rechner des Kunden installierten Computer-Programms (Java-Applet) an einen Server übertragen und von diesem aufgezeichnet werden. Die DE10224948A1 lehrt eine Vorrichtung und ein Verfahren zum Untersuchen von Bildern, bei dem Bedienhandlungen, die ein Proband mit einem Zeigegerät ausführt, aufgezeichnet und ausgewertet werden. Die erfindungsgemäße Vorrichtung besteht aus verschiedenen als Module und Einrichtungen bezeichneten Mitteln, welche nach dem Stand der Technik entweder als Software oder spezielle Hardware ausgestaltet sein müssen, um die erforderlichen Steuer- und Aufzeichnungs- und Auswertungsprozesse ausführen zu können. Die genannten vorbekannten Verfahren erfordern mithin die Installation und Einrichtung von Software auf dem Computersystem des Probanden, oder dem Webserver des jeweiligen Testobjektes, was die bereits dargelegten Nachteile birgt.

### 3. Darstellung der Erfindung:

Der Erfindung liegt die Aufgabe zugrunde, das Verhalten eines Internet-Users bei der Rezeption von Webseiten in einem automatischen und ferngesteuerten Verfahren aufzuzeichnen, ohne das hierfür spezielle Software auf dem Computer des Probanden installiert werden muss und dennoch das aktive Nutzerverhalten umfassend dokumentiert und nachvollzogen werden kann. Die aufgezeichneten Verhaltensparameter sollen dabei zu Auswertungszwecken im Kontext der jeweiligen Wahmehmungsinhalte des Probanden rekonstruierbar sein.

Erfindungsgemäß wird die Aufgabe durch das in Anspruch 1 beschriebene Verfahren gelöst. Vorteilhafte Ausführungen sind in den Unteransprüchen beschrieben.

### 4. Kurze Beschreibung den Zeichnungen:

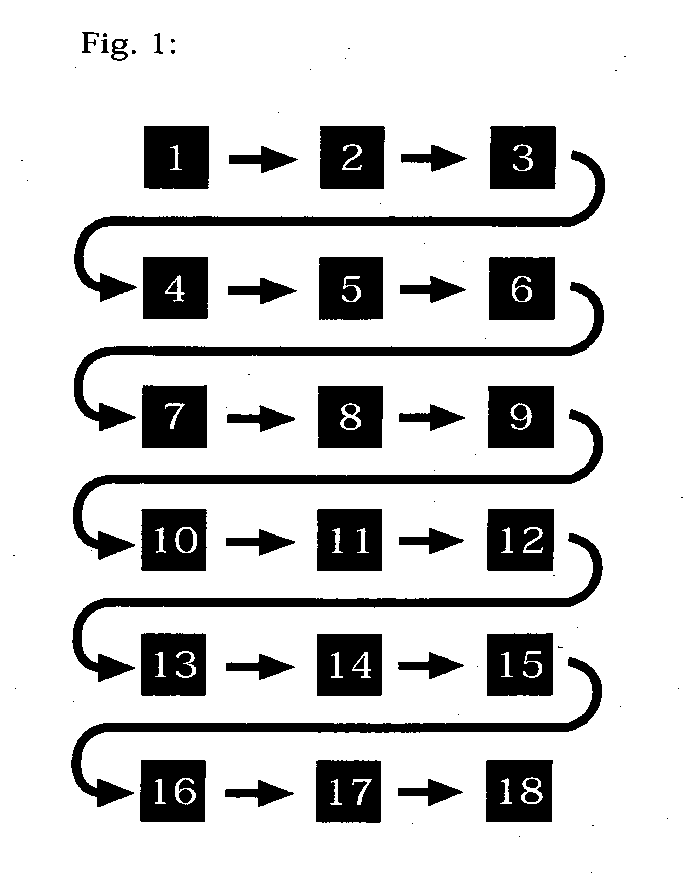

Fig.1 zeigt das Ablaufschema eines beispielhaften Verfahrensablaufs.

Das erfindungsgemäße Verfahren beruht auf der Grundidee, dass der HTTP (Hypertext Transfer Protocol) -Datenstrom zwischen dem Client-Computersystem des Probanden und dem Webserver des Webseiten-Anbieters durch einen Remote Testing Server abgefangen und so manipuliert wird, dass verschiedene Parameter des Verhaltens des Probanden während des Betrachtungsvorgangs und der Interaktion mit der Webseite rekonstruierbar aufgezeichnet werden. Der Proband fordert in Schritt a. eine zu testende Webseite durch Anklicken eines Startlinks an. Dieser Seitenaufruf (HTTP-Request) wird in Schritt b. vom Remote Testing Server abgefangen und registriert. Sodann führt der Remote Testing Server den abgefangenen HTTP-Request an den zu testenden Webserver in Schritt c. selbst aus. Hierauf liefert der betroffene Webserver in Schritt d. das angeforderte Dokument an den Remote Testing Server. Dokumente im vorgenannten Sinne sind sämtliche in einem Webbrowser-Programm darstellbaren Informationsinhalte. Das übergebene Dokument wird hierauf vom Remote Testing Server in Schritt e. mit einem Parser-Programm analysiert und sämtliche seiner Objekte registriert. Objekte können hierbei sämtliche Elemente des übermittelten Dokuments sein. Bei HTML (Hypertext Markup Language)- oder XML- (Extensible Markup Language)- Dokumenten handelt es sich dabei um Objekte im Sinne des DOM (Document Object Model). Danach wird das Dokument in Schritt f. mit einem weiteren Parser-Programm manipuliert: Zum einen werden sämtliche in dem Dokument enthaltenen externen Verweise (Hyperlinks, die auf Ziele außerhalb des Dokuments selbst verweisen) durch neue Bezüge auf den Remote Testing Server ersetzt (aa.). Dies gewährleistet, dass der Proband nicht aus der Testsitzung "herausfallen" kann. Aufgrund des registrierten Original-Dokuments können die ursprünglichen Ziele der Verweise später im Falle ihres Aufrufs durch den Probanden rekonstruiert werden. Ferner erstellt der Remote Testing Server anhand der spezifischen Dokumentsstruktur einen clientseitigen Parser zur Registrierung und Readressierung aller clientseitig dynamisch erstellbaren und/oder veränderbaren Bestandteile des Dokuments (bb.). Dokumente, die in einem Browser darstellbar sind, können ihrerseits dynamische Programmstrukturen enthalten, mit denen das Dokument auf dem Computersystem des Probanden zur Laufzeit verändert werden kann. Auf diese Weise können komplett neue Objekte des Dokuments erzeugt werden, die zum Zeitpunkt der Registrierung und Speicherung des Dokuments durch den Remote Testing Server zwar abstrakt als Möglichkeit angelegt, jedoch tatsächlich noch nicht vorhanden waren. Der clientseitige Parser hat die Aufgabe, diese Veränderungen zu registrieren, damit auch sie rekonstruierbar werden. Zudem hat der clientseitige Parser die weitere Aufgabe, etwaige externe Verweise, die dynamisch auf der Seite des Clients verändert oder erzeugt werden, durch neue Bezüge auf den Remote Testing Server zu ersetzen und dies nebst der ursprünglichen externen Ziele zu registrieren. Schließlich erstellt der Remote Testing Server eine Remote Testing Area, indem dem manipulierten Dokument Programmanweisungen zur Erfassung der Interaktionen des Probanden (Tracking-Funktionen) hinzufügt werden (cc.). Durch die Tracking-Funktionen können die Bewegungen der an das Computersystem des Probanden angeschlossenen Zeigeräte (etwa Maus, Mauspad, Trackball oder Joystick), Aktivierungen der Funktionstasten des Zeigegeräts (beispielsweise "Mausklicks") oder Tastatureingaben des Probanden erfasst werden. Die Tracking-Funktionen registrieren des weiteren sämtliche Veränderungen, die der Proband selbst auf seinem Computersystem an dem übermittelten Dokument aufgrund interaktiv bedienbarer Elemente vornehmen kann, damit auch diese rekonstruierbar werden. Neben den geschilderten Bedienhandlungen erfassen und registrieren die Tracking-Funktionen die dafür benötigten Zeitdauern und zwischen den Bedienhandlungen liegende Pausenzeiten. In Schritt g. versendet der Remote Testing Server die Remote Testing Area als Antwort (HTTP-Response) auf den HTTP-Request des Probanden. In Schritt h. werden sodann die Interaktionen des Probanden bei der Betrachtung des übermittelten Dokuments durch die Tracking-Funktionen erfasst und registriert. Ferner werden gegebenenfalls alle clientseitigen erstellten und/oder veränderten Veränderungen des Dokuments durch den clientseitigen Parser erfasst und registriert. In dem darauf folgenden Schritt i. werden sämtliche clientseitig erfassten Informationen sowie die Registrierungsinformationen an den Remote Testing Server übermittelt. Jeder neue HTTP-Request des Probanden über externe Verweise des manipulierten Dokuments innerhalb Remote Testing Area wird vom Remote Testing Server in Schritt j. entgegengenommen, und führt anhand des registrierten ursprünglichen Originalbezugs des Verweises zur Fortsetzung des Verfahrens bei Schritt c..

Das erfindungsgemäße Verfahren besitzt den Vorteil, dass das Verhalten eines Internet-Users bei der Rezeption von Webseiten in einem automatischen und ferngesteuerten Verfahren rekonstruierbar aufgezeichnet werden kann, ohne das hierfür Software auf dem Computer des Probanden installiert werden muss. Die aufgezeichneten Verhaltensparameter können zu Auswertungszwecken aufgrund der registrierten Dokumenteninhalte im Kontext der jeweiligen Wahmehmungsinhalte des Probanden rekonstruiert werden. Erst durch die server- und clientseitige Parser-Doppelstruktur des erfindungsgemäßen Verfahrens ist es dabei möglich, eine Testsitzung aus den gespeicherten Daten später geschlossen und vollumfassend zu rekonstruieren. Ferner besitzt das Verfahren den Vorteil, dass viele Probanden in kurzer Zeit getestet werden können. Zudem können die Probanden aus verschiedenen Regionen rekrutiert werden. Relevant ist zudem, dass die Probanden sich während der Testsitzung innerhalb ihrer gewohnten Umgebung befinden (zu Hause, am Arbeitsplatz), so dass Verfälschungen ihres Verhaltens aufgrund der Testsituation eines herkömmlichen Labortests (in einem Usability-Lab) auf ein Mindestmaß reduziert sind. Schließlich können die Probanden aufgrund der automatisch und ferngesteuert ablaufenden Testsitzung zu einer beliebigen Zeit teilnehmen und sind nicht an feste Termine gebunden. Dies erlaubt es auch, Probanden für Tests zu gewinnen, die üblicherweise schwer erreichbar sind oder weniger für den persönlichen Aufwand eines Tests in einem gesonderten Labor motivierbar sind, zu berücksichtigen. Das Verfahren besitzt den weiteren Vorteil, dass Anwender des Verfahrens nicht nur eigene Webseiten untersuchen lassen können, sondern beliebige Webseiten Dritter, da kein Schreibzugriff auf den Webserver erforderlich ist.

Vorzugsweise besteht das Remote Testing Area aus einem Frameset mit mindestens zwei Frames, wobei in einem Frame das manipulierte Dokument und im anderen Frame Funktionen zur Interaktion mit dem User und zur Steuerung des Testverlaufs dargestellt sind. Diese besondere Ausführungsform hat den Vorteil, dass dem Probanden in dem zusätzlichen Frame Möglichkeit zur Interaktion mit dem Testveranstalter gegeben werden können, etwa eine Email-Funktion, ein Feedback-Formular oder einen (Online-)Fragebogen. Ferner kann dieser zweite Frame Steuerungsfunktionen enthalten, mit denen der Proband die Testsitzung abrechen oder abschließen kann. Ebenso kann der Testveranstalter in diesem zweiten Frame spezielle seitenspezifische Hinweise und Handlungsaufforderungen dem Probanden zukommen lassen.

Um die spätere Rekonstruierung der Testsitzung inklusive der abgerufenen Dokumenteninhalte unabhängig von der Verfügbarkeit der getesteten Webseiten zu ermöglichen, werden sämtliche während der Testsitzung erfassten, Inhalts- und Verhaltensdaten rekonstruierbar gespeichert. Die rekonstruierbare Speicherung erfolgt durch die Speicherung sämtlicher registrierten Objekte in einer Datenbank.

In einer weiteren Ausgestaltung werden in einem automatischen Verfahren aus den gespeicherten Daten die vom Probanden betrachteten Dokumente rekonstruiert und als Screenshots und/oder Filme und/oder Animationen der Dokumente gespeichert, wobei anhand der gespeicherten Informationen, der vom Probanden verwendete Browser, die Größe des Browserfensters, die vom Probanden eingestellte Bildschirmauflösung, die Scrollposition des Browserfensters des Probanden sowie sämtliche clientseitig erfolgten Veränderungen der Webseiten berücksichtigt werden können.

Eine Auswertung der Interaktion des Probanden wird dadurch erreicht, dass die dass die angefertigten Screenshots und/oder Filme und/oder Animationen zusätzlich Visualisierungen der mittels der Tracking-Funktionen gesammelten Daten über Interaktionen des Probanden mit dem Dokument enthalten. Die Visualisierungen können etwa Verlaufsspuren der Bewegungen des vom Probanden verwendeten Zeigegeräts, Darstellungen der Mausklicks, oder verdichtete Darstellungen der Interaktionen wie Heatmaps enthalten. Eine weitere Form der Form der Visualisierung sind Website-Overlays, bei der eine leicht veränderte (bspw. verkleinerte), aber vollständig bedienbare und originalgetreue Darstellung des getesteten Webangebots online zum Abruf bereitgestellt wird. In dieser komprimierten Form der Darstellung können zusätzliche Informationen, wie etwa Page-Impressions, Klick-Raten, oder Feedback-Anmerkungen der Nutzer zur jeweiligen Seite dargestellt werden.

In einer besonderen Ausgestaltung werden sämtliche gewonnen Daten automatisiert mit den Screenshots und/oder Filmen und/oder Animationen sowie den weiteren Visualisierungen zur Auswertung zusammengeführt und aufbereitet dargestellt, wobei die Aufbereitung durch Heatmaps, Website-Overlays oder Scorecards erfolgen kann. Die Gesamtdarstellung kann dabei online im Internet abrufbar sein.

Eine Beschleunigung des Verfahrensablaufs lässt sich dadurch erreichen, dass die Aufgaben des Remote Testing Servers von mindestens zwei Remote Testing Servern ausgeführt werden, die über einen Loadbalancer zu einem Cluster zusammengefasst sind.

Eine Beschleunigung des Verfahrensablaufs lässt sich ferner dadurch erreichen, dass die Aufgaben des Remote Testing Servers von mehreren miteinander verbundenen Remote Testing Servern arbeitsteilig kooperativ ausgeführt werden.

Das erfindungsgemäße Verfahren wird nachstehend zur Veranschaulichung anhand eines Ausführungsbeispiels in einzelnen Schritten näher beschrieben.

Fig.1 zeigt ein Ablaufschema eines beispielhaften Verfahrensablaufs.
1. Ein Internet-User befindet sich auf der Webseite www.sirvaluse.de. Durch ein Popup-Fenster wird er zu einer Internet-Testsitzung für die Webseite www.sirvaluse.de eingeladen (OnSite-Einladung).
2. Diese Möglichkeit nimmt der User wahr, indem er auf den im Popup-Fenster angebotenen Hyperlink klickt.
3. Durch den Hyperlink wird der Proband auf eine Einstiegsseite auf dem Remote Testing Server (RTS) unter der Adresse www.remote-testing.de geleitet, auf der eine schriftliche Vorbefragung des Users durchgeführt wird. Gleichzeitig werden dem User-spezifische Variablen (Teilnehmer-ID, etc.) verliehen. Die Antworten der Vorbefragung werden unter Bezugnahme auf die User-spezifischen Variablen gespeichert. Nach der Vorbefragung wird der User vom Einstiegsfragebogen auf den Startlink geleitet.
4. Der User aktiviert den Startlink.
5. Der HTTP-Request des Probanden wird durch den RTS abgefangen. Mit dem HTTP-Request werden die dem Probanden verliehenen User-Spezifischen Variablen gleichzeitig an den Remote Testing Server übergeben (http://www. remote-testing.de/rt/proxy/std/103/5/41294-4/http://www.sirvaluse.de) und vom Remote Testing Server in einer Datenbank gespeichert. Danach passt der RTS die Header-Angaben (Cookie-Informationen, Host und Referer) des HTTP-Requests auf die Domain des Zielservers sirvaluse.de an, als hätte der Browser des Users diese Zielseite direkt angesprochen.
6. Sodann schickt der RTS den transformierten HTTP-Request an den Zielserver sirvaluse.de und wartet auf die Antwort.
7. Der Zielserver, auf dem sich die Einstiegsseite www.sirvaluse.de/index.html befindet, liefert dieses Dokument als HTTP-Response an den RTS. Der HTTP-Response-Header (Antwort-Header) sowie die übermittelte Webseite index.html des Zielservers wird entgegengenommen. Die Cookie-Informationen im Antwort-Header werden vom RTS auf die Domain des RTS transformiert. Das übertragene Dokument enthält ferner eine im Header definierte Weiterleitung ("Location: http://www.sirvaluse.de/redirect_location.html"), die vom RTS so angepasst wird, dass die Weiterleitung wieder über den RT-Server erfolgt ("Location: http://www.remote-testing.de/rt/proxy/std/10315141294-4/http://www.sirvaluse.de/redirect_location.html").
8. Sodann wird der Inhalt des Dokuments an den HTML-Parser des RTS weitergereicht. Der Parser liest das umgebene HTML-Dokument index.html ein und legt es in einer Baumstruktur (einer so genannten verketteten Liste) im Hauptspeicher ab. JavaScript/CSS-Abschnitte, die in HTML-Tags und HTML-Attributen vorhanden sein können, werden ausgegliedert. Alle HTML-Attribute, die Elemente auf dem Webserver adressieren, werden sodann transformiert, so dass sie über den RTS geladen werden. So wird etwa der im Dokument enthaltene Hyperlink "<a href="../shop.php">Shop</a>" transformiert in die Zeichenkette "<a href="http://www.remote-testing.de/rt/proxylstd/103/5/41295-4/http://www.sirvaluse.de/shop.php">Shop</a>". Der weitere im Dokument index.html enthalte Link "<img src="/bilder/image.gif" />", der auf auf die Bilddatei "image.gif" verweist, wird transformiert in die Zeichenkette <img src="http://www.remote-testing.de/rt/proxy/std/103/5141296-4/http://www.sirvaluse.de/bilder/image.gif" />". Sämtliche in dem Dokument enthaltenen Links werden mithin so umgeschrieben, dass der jeweilige Link auch innerhalb der Remote Testing Area (RTA) benutzbar bleibt und dennoch das Original-Dokument durch den RTS vom Ziel-Webserver heruntergeladen und an den Browser des Probanden weitergereicht werden kann. Jedem Link wird auf diese Weise gleichzeitig eine RTSserverspezifisch eindeutige ID zugewiesen. Der jeweilige Absolutbezug zum Wurzelverzeichnis des Zielservers wird dabei berücksichtigt.
9. In das Dokument wird durch den RTS ein clientseitiger JavaScript-Parser mit einem erweiterten Regelset (JS-Parser) in die HTML-Struktur durch eine Inkludierung per HTML-Tag implementiert. Die Argumente aller mit dem Webserver kommunizierenden Funktionen innerhalb der in Schritt 8. erfassten und ausgegliederten Javascript- und CSS-Abschnitte werden durch spezielle Funktionen des clientseitigen JS-Parsers gekapselt. Alle Javascript-Funktionen, die entfernte Elemente adressieren, werden mit den Funktionen des clientseitigen JS-Parsers bespickt. Das gleiche gilt für per JavaScript dynamisch erzeugte HTML-Abschnitte, die Ihrerseits wieder JS-Abschnitte beinhalten können. So wird etwa die Eigenschaft des Objekts "location.href = baseURL + ,/pictures/' + extended_link" transformiert in "location_href = RT_SRC_REPLACE(baseURL + ,/pictures/' + extended_link)". Die Eigenschaft des Objekts "document.write("<script>...</script><div id='divid'>TEXT/LINK/...</div>°)" wird in "document.write(RT DW REPLACE("<script>... </script><div id='divid'>TEXT/LINK/...</div>"))" transformiert. Ein serverseitiger JavaScript-Parser stellt zudem alle Fenster/Frame-Bezüge her, die durch das Remote Testing Frameset um eine Ebene herabgesetzt werden. So wird der Bezug "top.document.getElementByld("foo").value = "...";" transformiert in den Bezug "top.rt_mainframe.documentgetElementByld("foo"). value = "... "".
10. Sämtliche in Schritt 8. erfassten und in den Folgeschritten manipulierten Bestandteile werden zur ursprünglichen Struktur des Dokuments zusammengefasst, und das manipulierte Dokument als Inhalts-Frame in ein übergeordnetes Frameset eingebunden.
11. Dem Dokument wird durch den RTS ein Tracking-Script in die HTML-Struktur durch Inkludierung per HTML-Tag hinzugefügt. Das Tracking-Script kann alle clientseitigen Mausinteraktionen erfassen und gibt die Daten per HTTP-Request beim Verlassen der jeweiligen Seite durch den Probanden an den RTS weiter. Des Weiteren kann das Tracking-Script per HTTP-Request die URL und die Größe des Browserfensters der besuchten Seite an den RTS übertragen. Außerdem sorgt das Tracking-Script dafür, dass zu jeder Webseite eine Feedbackleiste in einem Interaktions-Frame hinzu geladen wird.
12. Das Dokument wird als HTTP-Response auf den ursprünglichen HTTP-Request des Probanden übertragen.
13. Im Browser auf dem Computersystem des Probanden wird die Remote Testing Area durch Einbettung des gesendeten Dokumentes in ein Frameset aufgebaut. Die Seitenspezifischen Daten der jeweiligen betrachteten Seite (URL, Fenstergröße, Browser-Kennung) werden per XMLHTTPRequest an den Remote Testing Server versandt.
14. Clientseitig werden alle vom Browser des Probanden dynamisch erzeugten Verweise mittels der in Schritt 9. eingesetzten JavaScript-Funktionen durch den clientseitigen JavaScript-Parser manipuliert,
15. Die vom Probanden ausgeführten Bewegungen mit der Maus, die ausgeführten Mausklicks und Tastatureingaben werden durch das in Schritt 11. eingebettete Tracking-Script erfasst und aufgezeichnet.
16. Die erfassten aufgezeichneten Informationen werden an den Remote Testing Server übertragen.
17. Der Proband klickt innerhalb der Webseite auf den Link "Shop", der mit dem Hyperlink "<a href="http://www.remote-testing.de/rt/proxy/std/103/5/41295-4/http://www.sirvaluse.de/shop.php">Shop</a>" unterlegt ist.
18. Der RTS fängt den HTTP-Request ab und schickt anhand des gespeicherten Originalbezugs "<a href="../shop.php">Shop</a>" einen eigenen HTTP-Request an die Adresse www.sirvaluse.de/shop.php.

### 5. Gewerbliche Anwendbarkeit:

Das erfindungsgemäße Verfahren eignet sich zur Durchführung von Remote-Usability Tests nahezu jeglicher Online-Applikationen, die in Browser-Programmen laufen, etwa beliebiger Webseiten im Internet oder in Intranets. Insbesondere eignet sich das erfindungsgemäße Verfahren für die Untersuchung gewerblicher Webseiten wie Online-Shops.

## Patentansprüche

1. Computergestütztes Verfahren zur ferngesteuerten automatischen Erfassung des Userverhaltens bei der Rezeption von Webseiten, **gekennzeichnet durch** die Schritte:
a. Aktivieren eines Startlinks **durch** den Probanden,
b. Abfangen und Registrieren des an den Ziel-Webserver gerichteten HTTP-Requests des Probanden **durch** den Remote Testing Server,
c. eigene Ausführung des HTTP-Requests an den zu testenden Webserver **durch** den Remote Testing Server,
d. Abfangen des vom Ziel-Webserver mit der HTTP-Response gesendeten Dokuments,
e. Registrieren aller Objekte des übermittelten Dokuments **durch** den Remote Testing Server mittels eines Parsers,
f. Manipulation des vom Ziel-Webserver gesendeten Dokuments **durch** den Remote Testing Server mittels eines Parsers, umfassend die
aa. Readressierung sämtlicher externen Verweise des übermittelten Dokuments, so dass die externen Verweise auf den Remote Testing Server bezogen sind,
bb. Erstellung und Einbettung eines clientseitigen-Parsers zur Registrierung und Readressierung aller clientseitig dynamisch erstellten und/oder veränderten Bestandteile des Dokuments,
cc. Erstellen einer Remote Testing Area **durch** Hinzufügen von Tracking-Funktionen zur Erfassung der Interaktionen des Probanden zu dem manipulierten Dokument des Ziel-Werbservers,
g. Senden der Remote Testing Area als HTTP-Response auf den ursprünglichen HTTP-Request des Probanden,
h. Erfassung der Interaktionen des Probanden während der Betrachtung des Dokuments innerhalb der Remote Testing Area **durch** die Tracking-Funktionen und Registrierung sowie Readressierung aller clientseitig dynamisch erstellten und/oder veränderten Bestandteile des Dokuments **durch** den clientseitigen Parser, wobei der clientseitige Parser die Aufgabe hat, externe Verweise, die dynamisch auf der Seite des Clients verändert oder erzeugt werden, **durch** neue Bezüge auf den Remote Testing Server zu ersetzen und dies nebst der ursprünglichen externen Ziele zu registrieren,
i. Übertragung der aufgezeichneten Informationen aus der Remote Testing Area an den Remote Testing Server,
j. jeder neue HTTP-Request des Probanden über externe Verweise des manipulierten Dokuments innerhalb der Remote Testing Area wird vom Remote Testing Server entgegengenommen, und führt anhand des registrierten ursprünglichen Originalbezugs des Verweises zur Fortsetzung des Verfahrens bei Schritt c..

2. Verfahren nach Anspruch 1, **dadurch gekennzeichnet, dass** die Remote Testing Area aus einem Frameset mit mindestens zwei Frames besteht, wobei in einem Frame das manipulierte Dokument und im anderen Frame Funktionen zur Interaktion mit dem User und zur Steuerung des Testverlaufs dargestellt sind.

3. Verfahren nach Anspruch 1 oder 2, **dadurch gekennzeichnet, dass** sämtliche während der Testsitzung erfassten Inhalts- und Verhaltensdaten rekonstruierbar gespeichert werden,

4. Verfahren nach Anspruch 3, **dadurch gekennzeichnet dass** in einem automatischen Verfahren aus den gespeicherten Daten die vom Probanden betrachteten Dokumente rekonstruiert und Screenshots und/oder Filme und/oder Animationen der Dokumente erstellt und gespeichert werden, wobei anhand der gespeicherten Informationen, der vom Probanden verwendete Browser, die Größe des Browserfensters, die vom Probanden eingestellte Bildschirmauflösung, die Scrollposition des Browserfensters des Probanden sowie sämtliche clientseitig erfolgten Veränderungen der Webseiten berücksichtigt werden können.

5. Verfahren nach Anspruch 4, **dadurch gekennzeichnet, dass** die angefertigten Screenshots und/oder Filme und/oder Animationen zusätzlich Visualisierungen der mittels der Tracking-Funktionen gesammelten Daten über Interaktionen des Probanden mit dem Dokument enthalten.

6. Verfahren nach einem der Ansprüche 1 bis 5, **dadurch gekennzeichnet, dass** sämtliche gewonnenen Daten automatisiert mit den Screenshots und/oder Filmen und/oder Animationen zur Auswertung zusammengeführt und aufbereitet dargestellt werden, wobei die Aufbereitung durch Heatmaps, Website-Overlays oder Scorecards erfolgen kann.

7. Verfahren nach einem der Ansprüche 1 bis 6, **dadurch gekennzeichnet, dass** die Aufgaben des Remote Testing Servers von mindestens zwei Remote Testing Servern ausgeführt werden, die über einen Loadbalancer zu einem Cluster zusammengefasst sind.

8. Verfahren nach einem der Ansprüche 1 bis 7, **dadurch gekennzeichnet, dass** die Aufgaben des Remote Testing Servers von mehreren miteinander verbundenen Remote Testing Servern arbeitsteilig kooperativ ausgeführt werden.

## Claims

1. Computer-assisted method for the remote-controlled automatic detection of user behavior in the reception of web pages, **characterized by** the following steps:
a. activation of a start link by the subject,
b. interception and recording by the remote testing server of the subject's HTTP request directed to the target web server,
c. independent execution by the remote testing server of the HTTP request to the web server to be tested,
d. interception of the document sent from the target web server together with the HTTP response,
e. recording by the remote testing server of all objects of the transmitted document, using a parser,
f. manipulation by the remote testing server of the document sent from the target web server, using a parser, including
aa. readdressing all external links of the transmitted document so that the external links are based on the remote testing server,
bb. creating and embedding a client-side parser for recording and readdressing all client-side dynamically created and/or changed components of the document,
cc. creating a remote testing area by adding tracking functions for detecting the interactions of the subject with the manipulated document of the target web server,
g. sending the remote testing area as an HTTP response to the original HTTP request by the subject,
h. detection of the subject's interactions while observing the document within the remote testing area by tracking functions and recording, and readdressing all client-side dynamically created and/or changed components of the document by the client-side parser, the task of the client-side parser being to replace external links which are dynamically changed or created by the client with new references to the remote testing server, and to record this together with the original external targets,
i. transmission of the recorded information from the remote testing area to the remote testing server,
j. acceptance by the remote testing server of each new HTTP request by the subject via external links of the manipulated document within the remote testing area, resulting in continuation of the method with step c, based on the recorded original reference to the link.

2. Method according to Claim 1, **characterized in that** the remote testing area is composed of a frameset having at least two frames, the manipulated document being represented in one frame, and functions for interacting with the user and for controlling the testing process being represented in the other frame.

3. Method according to Claim 1 or 2, **characterized in that** all content data and behavior data detected during the test session are stored in a reconstructable manner.

4. Method according to Claim 3, **characterized in that** in an automatic process, based on the stored data the documents observed by the subject are reconstructed, and screenshots and/or videos and/or animations of the documents are created and stored, it being possible, based on the stored information, to take into account the browser used by the subject, the size of the browser window, the screen resolution set by the subject, the scroll position of the subject's browser window, and all changes to the web pages made by the client.

5. Method according to Claim 4, **characterized in that** the prepared screenshots and/or videos and/or animations additionally contain displays of the data, collected by means of the tracking functions, concerning interactions of the subject with the document.

6. Method according to one of Claims 1 through 5, **characterized in that** all acquired data are automatically combined with the screenshots and/or videos and/or animations for evaluation and displayed in edited form, whereby the editing may be carried out using heatmaps, website overlays, or scorecards.

7. Method according to one of Claims 1 through 6, **characterized in that** the tasks of the remote testing server are carried out by at least two remote testing servers which are combined into a cluster by means of a load balancer.

8. Method according to one of Claims 1 through 7, **characterized in that** the tasks of the remote testing server are carried out in a cooperative division of labor by multiple remote testing servers which are connected to one another.

## Revendications

1. Procédé assisté par ordinateur pour la détermination automatique télécommandée du comportement d'un utilisateur lors de la réception de pages web, **caractérisé par** les étapes suivantes :
a. activation d'un lien de départ par le sujet d'essai ;
b. interception et enregistrement, par le serveur d'essai distant, de la requête HTTP adressée par le sujet d'essai au serveur web de destination ;
c. exécution propre, par le serveur d'essai distant, de la requête HTTP vers le serveur web à tester ;
d. interception du document envoyé par le serveur web de destination avec la réponse HTTP ;
e. enregistrement de tous les objets du document transmis par le serveur d'essai distant à l'aide d'un analyseur syntaxique ;
f. manipulation du document envoyé par le serveur web de destination par le serveur d'essai distant à l'aide d'un analyseur syntaxique, comprenant les étapes suivantes :
aa. réadressage de tous liens extérieurs du document transmis, afin que les liens extérieurs se réfèrent au serveur d'essai distant ;
bb. production et insertion d'un analyseur syntaxique côté client, pour l'enregistrement et le réadressage de tous les éléments du document qui sont produits et/ou modifiés dynamiquement du côté du client ;
cc. production d'une zone d'essai distante par addition de fonctions de suivi destinées à collecter les interactions du sujet d'essai avec le document manipulé du serveur web de destination ;
g. envoi de la zone d'essai distante comme réponse HTTP à la requête HTTP initiale du sujet d'essai ;
h. collecte des interactions du sujet d'essai pendant l'observation du document dans la zone d'essai distante, à l'aide des fonctions de suivi, et enregistrement et réadressage de tous les éléments du document qui sont produits et/ou modifiés dynamiquement du côté du client par l'analyseur syntaxique côté client, l'analyseur syntaxique côté client ayant pour mission de remplacer les liens extérieurs qui sont modifiés ou produits dynamiquement sur la page du client par de nouvelles références au serveur d'essai distant et de les enregistrer avec les destinations extérieures initiales ;
i. transmission vers le serveur d'essai distant des informations enregistrées dans la zone d'essai distante ;
j. pour toute nouvelle requête HTTP du sujet d'essai qui utilise les liens extérieurs du document manipulé à l'intérieur de la zone d'essai distante et qui est reçue par le serveur d'essai distant, en fonction de la référence originale initiale du lien, qui a été enregistrée, reprise du procédé à l'étape c.

2. Procédé selon la revendication 1, **caractérisé en ce que** la zone d'essai distante se compose d'un jeu de cadres comportant au moins deux cadres, l'un des cadres affichant le document manipulé et l'autre cadre affichant des fonctions d'interaction avec l'utilisateur et de commande du déroulement de l'essai.

3. Procédé selon l'une des revendications 1 ou 2, **caractérisé en ce que** toutes les données de contenu et de comportement collectées pendant la session d'essai sont enregistrées de manière reconstructible.

4. Procédé selon la revendication 3, **caractérisé en ce que**, dans un procédé automatisé se fondant sur les données enregistrées, les documents observés par le sujet d'essai sont reconstruits et des copies d'écran et/ou des films et/ou des animations des documents sont produits et enregistrés, le navigateur utilisé par le sujet d'essai, la taille de la fenêtre du navigateur, la résolution d'écran sélectionnée par le sujet d'essai, la position de défilement de la fenêtre du navigateur du sujet d'essai ainsi que toutes les modifications des pages web commandées du côté du client pouvant être pris en compte à partir des informations enregistrées.

5. Procédé selon la revendication 4, **caractérisé en ce que** les copies d'écran et/ou films et/ou animations réalisés contiennent en outre des visualisations des données recueillies au moyen des fonctions de suivi sur les interactions entre le sujet d'essai et le document.

6. Procédé selon l'une des revendications 1 à 5, **caractérisé en ce que** toutes les données recueillies sont réunies de manière automatique aux copies d'écran et/ou films et/ou animations en vue de leur analyse et sont représentées ainsi traitées, le traitement pouvant se faire par des cartes thermiques, des superpositions du site web ou des cartes de résultats.

7. Procédé selon l'une des revendications 1 à 6, **caractérisé en ce que** les missions du serveur d'essai distant sont assurées par au moins deux serveurs d'essai distants qui sont réunis en une grappe avec un équilibreur de charge.

8. Procédé selon l'une des revendications 1 à 7, **caractérisé en ce que** les missions du serveur d'essai distant sont assurées de manière coopérative avec division du travail par plusieurs serveurs d'essai distants reliés entre eux.
